# EUROPEAN PATENT APPLICATION

(11) **EP 4 679 278 A1**
(43) Date of publication of application: **14.01.2026**
(21) Application number: 25186417.9
(22) Date of filing: 30.06.2025
(51) Int. Cl.: G06F 13/40, H04L 25/49

(54) **METHOD AND APPARATUS TO SEND AND RECONSTRUCT AN ISOCHRONOUS OR BURSTY STREAM ACROSS A MULTIPLEXED LINK**

(30) Priority: 11.07.2024 IN 202441053070
(71) Applicant: NXP USA, Inc., Austin, TX 78735 (US)
(72) Inventor: Dasgupta, Arindam, 5656 AG Eindhoven (NL); Daniel, Steven, 5656 AG Eindhoven (NL)
(74) Representative: Schmütz, Christian Klaus Johannes

(57) **Abstract**

A method, apparatus, and system are disclosed for a host to process and transmit one or more streams having a data signal and bit clock signal over a serial channel to a receiver by detecting a count and timing location for one or more clock edge transitions in the bit clock signal with respect to a pre-negotiated duration spanning over one or multiple aggregated frames which are transmitted over the serial channel, and then coding the count and timing location with one or more corresponding data values from the data signal into a multi-bit clock phase data codeword which is inserted into one of the aggregated frame that is transmitted over the serial channel to the receiver.

## Description

### Field of the Invention

The present disclosure is directed in general to the field of electrical circuits. In one aspect, the present disclosure relates to encoding one or more digital clock and data signals onto a serial channel.

### Description of the Related Art

A host and receiving device, such as a smartphone, laptop computer, or other electronic device, may generate one or more streams including a bursty stream (e.g., a universal serial bus (USB) stream), an isochronous stream (e.g., an audio stream), and an available bit rate stream (e.g., a fixed rate serial data stream). Typically, a parallel wired channel, such as a USB, is used to transmit the stream(s) generated by the host to the receiving device, and vice versa. For example, an inter-IC sound (I2S) electrical serial bus interface standard is defined for communicating pulse-code modulated (PCM) audio data between integrated circuits in an electronic device by using separate clock and serial data signals that are transmitted in parallel over parallel wired bus, resulting in simpler receivers than those required for asynchronous communications systems that need to recover the clock from the data stream. While the parallel wired channel allows for the streams to be transmitted between each other, there are challenges with efficiently transmitting and receiving multiple clock and data streams over a serial bus interface while meeting latency and jitter requirements for the streams. Further limitations and disadvantages of conventional solutions and technologies will become apparent to one of skill in the art after reviewing the remainder of the present application with reference to the drawings and detailed description which follow.

### BRIEF DESCRIPTION OF THE DRAWINGS

The present invention may be understood, and its numerous objects, features and advantages obtained, when the following detailed description of a preferred embodiment is considered in conjunction with the following drawings.
Figure 1 depicts a schematic block diagram of a communication system including a host and a receiver device which are coupled by a single serial communication link in accordance with selected embodiments of the present disclosure.
Figure 2 depicts an example radio frequency frame.
Figure 3 depicts a sequence of timing diagrams to illustrate I2S clock phase encoding of a stream onto a single serial communication link in accordance with selected embodiments of the present disclosure.
Figure 4 illustrates a fill level of a receive FIFO used to decode I2S clock phase data in accordance with selected embodiments of the present disclosure.
Figure 5 illustrates the propagation delay versus bits for a received stream in accordance with selected embodiments of the present disclosure.
Figure 6 depicts a simplified process flow for encoding and transmitting I2S clock phase data in a downstream portion of a frame sent over a single serial communication link in accordance with selected embodiments of the present disclosure.

### DETAILED DESCRIPTION

A low latency, low bandwidth serial channel encoding and decoding method, system and apparatus are described for sending an isochronous or bursty stream having clock and data stream signals across a single serial communication link or channel by encoding clock phase information with the data stream signal(s) so that the clock and data stream signals can be reconstructed at the receiver. In selected embodiments, an I2S serial channel encoder is configured to aggregate multiple isochronous or bursty data streams over a multiplexed wired or wireless link and reconstruct the stream on the other side within specified jitter limits without any need to decode and store the incoming stream. To this end, the I2S serial channel encoder may be configured to count the number of defined (e.g., rising) I2S clock edges that occur during a defined recording interval or time base (T). In addition, the I2S serial channel encoder may include a sampling phase counter which is configured to be synchronous with the defined recording interval/time base (T) to detect one or more defined time intervals (e.g., T0-T63) of the time base when a defined I2S clock edge is detected. By encoding the count and timing interval(s) of the defined I2S clock edge(s) along with the data value corresponding to each defined clock edge, the I2S serial channel encoder can transmit isochronous or bursty data streams over a multiplexed wired or wireless communication link to a receiver which can reconstruct the data and clock streams within specified jitter limits without any need to decode and store the incoming stream. To this end, the receiver may include a sampling phase counter which is configured to reconstruct the I2S sampling clock and data from each stream based on the encoded I2S clock edge count, timing interval, and data value information.

In this disclosure, an improved method and apparatus are described for transmitting streams between a host and a device over a serial channel to address various problems in the art where various limitations and disadvantages of conventional solutions and technologies will become apparent to one of skill in the art after reviewing the remainder of the present application with reference to the drawings and detailed description provided herein. Various illustrative embodiments of the present invention will now be described in detail with reference to the accompanying figures. While various details are set forth in the following description, it will be appreciated that the present invention may be practiced without these specific details, and that numerous implementation-specific decisions may be made to the invention described herein to achieve the device designer's specific goals, such as compliance with process technology or design-related constraints, which will vary from one implementation to another. While such a development effort might be complex and time-consuming, it would nevertheless be a routine undertaking for those of ordinary skill in the art having the benefit of this disclosure. For example, selected aspects are depicted with reference to simplified schematic circuit and block diagram drawings without including every device feature or geometry in order to avoid limiting or obscuring the present invention. Such descriptions and representations are used by those skilled in the art to describe and convey the substance of their work to others skilled in the art. It is also noted that, throughout this detailed description, certain elements in the figures are illustrated for simplicity and clarity and have not necessarily been drawn to scale. Further, reference numerals have been repeated among the drawings to represent corresponding or analogous elements.

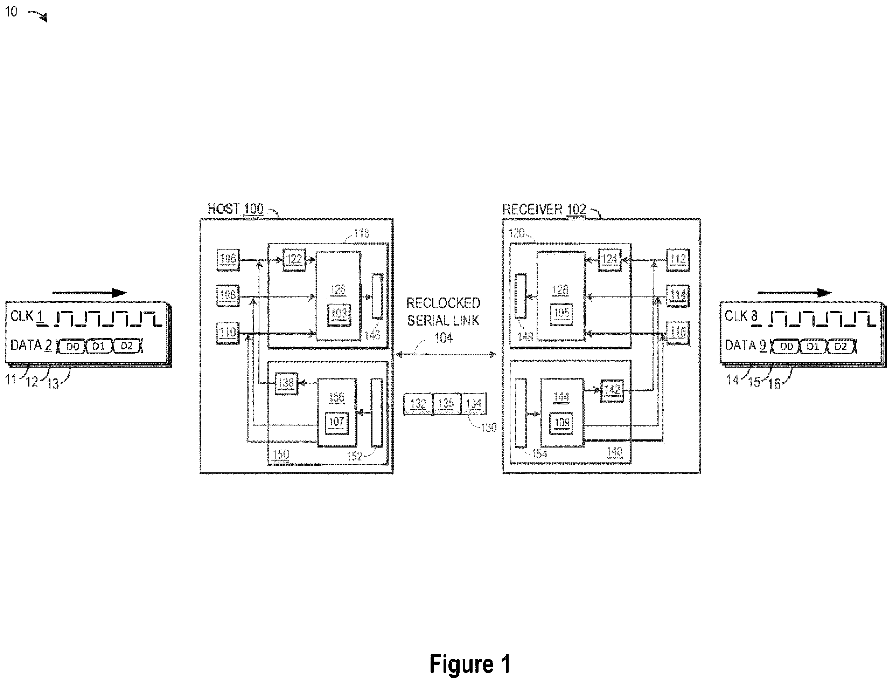

For an improved understanding of selected embodiments of the present disclosure, reference is now made to Figure 1 which depicts a schematic block diagram of a communication system 10 including a host device 100 and a receiver device 102 which are coupled by a single re-clocked serial communication link 104. As describe hereinbelow, the host device 100 is operatively configured to receive clock and data signals 1, 2 contained in one or more input streams 11-13 where they are processed, combined and encoded for wired or wireless transmission as one or more message frames over the serial communication link 104 to the receiver 102 where the message frames are processed, separated and decoded to output clock and data signals 8, 9 contained in one or more output streams 14-16. As will be appreciated, the input streams 11-13 may each be an audio stream which contains both clock and data stream (e.g., an I2S stream) which are aggregated or multiplexed for transport over a re-clocked serial communication link 104 which can either be wired or wireless. In any such aggregator system, the input streams can be generated from multiple sources, and then these independent streams need to be multiplexed and sent over the serial communication link 104 that again has to be demultiplexed at the receiver before reconstructing the original stream.

As will be appreciated, the host and receiver devices 100, 102 may each be one or more of a smartphone, laptop, or other electronic device, and may generate a stream or receive the stream from another device. The depicted host 100 and receiver 102 include stream input/output (I/O) circuits 106/108/110, 112/114/116 which output one or more types of streams to a respective transmission circuit 118, 120 or which receive as an input one or more types of streams from a respective reception circuit 150, 140. For example, the stream I/O circuit 106, 112 may input or output a bursty data stream, where content on the stream is present in uneven or short spurts. An example of the bursty data stream may be universal serial bus 2.0 (USB2), embedded USB2 fast speed (FS), USB low speed (LS), or USB high speed (HS). USB as referred to herein may generally refer to one of the disclosed versions of USB2 and any previous or subsequent versions. In addition or in the alternative, the stream I/O circuit 108, 114 may input or output an isochronous stream, where content on the stream is present periodically. An example of the isochronous stream may be packetized content, such as an audio stream. In addition or in the alternative, the stream I/O circuit 110, 116 may input or output an available bit rate stream, where content on the stream is present at a fixed data rate. An example of the available bit rate stream may be a fixed rate data stream which guarantees a particular bit rate service such as housekeeping data (e.g., program state, variables) associated with the host 100 or receiver device 102. The streams may be transmitted from the host 100 to receiver device 102 and vice versa via the serial communication link 104, such as a wireless radio frequency channel that operates in an unlicensed band between 57 and 63 GHz, for example, or a serial wired channel. The serial communication link 104 allows for transmission of the streams between the host 100 and receiver device 102 without being limited to a physical connection while maintaining latency and jitter requirements for the transmitted streams.

The transmission circuit 118 at the host 100 facilitates transmission of streams from the host 100 to the receiver 102, while the transmission circuit 120 at the receiver 102 facilitates transmission of streams from the receiver 102 to the host 100. Each transmission circuit 118, 120 has a bursty stream encoder 122, 124, aggregator 126, 128 with corresponding clock phase encoder 103, 105, and transmitter 146, 148. At the bursty stream encoder 122, 124, the content of a bursty stream (e.g., data and/or control information) may have its states encoded, such as by generating a codeword which the aggregator 126, 128 inserts into a message frame that is transmitted over the serial communication link 104 such that the states are able to be recovered at a destination indicated at the receiver 102. In selected embodiments, bits of other streams, such as the isochronous stream or available bit rate stream, may or may not be encoded as codewords. In addition or in the alternative, the aggregator 126, 128 may use the clock phase encoder 103, 105 to encode the data and clock signal information from the streams generated by the I/O circuits 106/108/110, 112/114/116 which have clock signal transitions and corresponding data values. For example, the clock phase encoder 103 may be configured to encode the data streams by counting the number and timing location of defined clock edges that occur during a defined recording interval or time base (T), and by encoding the clock edge count and timing location(s) into a clock phase data for each stream. In this way, the aggregator 126, 128 receives the clock phase data for each stream, along with the corresponding data value and any associated codewords, and aggregates the clock phase data and corresponding data values into a serial communication message frame that is sent over the serial communication link 104 to the receiver 102 which can reconstruct the clock and data streams within specified jitter limits.

In selected embodiments, the state transitions of only a bursty stream are encoded as a codeword, such as described in U.S. Patent Application No. 18/658,400, filed May 8, 2024, entitled "METHOD AND APPARATUS FOR ENCODING AND MULTIPLEXING A STREAM IN A SERIAL CHANNEL" which is incorporated by reference as if fully set forth herein. In other embodiments, state transitions of other streams may be encoded as codewords in addition to that of the bursty stream. For example, the state transition of the isochronous stream or available bit rate stream may be encoded as codewords in addition to the state transition of the bursty stream. In other embodiments, state transitions of a bursty stream may not be encoded as codewords.

At the host 100, a transmitter 146 transmits the output from the aggregator 126 in a frame 130 which is transmitted over the serial communication link 104 to the receiver 102. Similarly, a transmitter 148 at the receiver 102 transmits the output from the aggregator 128 to the host 100 in the frame 130 which is transmitted over the serial communication link 104 to the host 100. The frame 130 may have a host downstream portion 132 and a receiver upstream portion 134 which are separated by an idle period 136. The aggregator 126 at the host 100 aggregates the encoded data and clock signal bits corresponding to the streams into the host downstream portion 132 of the frame 130 which is transmitted by the transmitter 146. In similar fashion, the aggregator 128 at the receiver 102 aggregates the encoded data and clock signal bits corresponding to the streams into the receiver upstream portion 134 of the frame 130 which is transmitted by the transmitter 148. The transmission circuit 118 may transmit the host downstream portion 132 over the serial communication link 104 to the receiver 102, and then after the idle period 136, the transmission circuit 120 may transmit the receiver upstream portion 134 over the serial communication link 104 to the host 100. The frame 130 having the host downstream portion 132 and receiver upstream portion 134 may be transmitted at a fixed rate or a variable rate. In an example, a frame 130 having a duration of 160 nsec may be transmitted every 160 nsec. In another example, a frame 130 having a duration of 160 nsec may be transmitted at a time greater than 160 nsec. Further, a frame 130 may be transmitted a plurality of times over the serial communication link 104 with the idle period 136 (not shown) also separating respective frames.

As depicted, the host 100 and receiver 102 may also include respective reception circuit 150, 140, with respective receivers 152, 154, disaggregators 156, 144 with corresponding clock phase decoders 107, 109, and bursty stream decoders 138, 142. After the host 100 transmits the host downstream portion 132 of the frame 130, the reception circuit 140 of the receiver 102 receives the host downstream portion 132 of the frame 130 at a receiver 154 after a propagation delay over the serial communication link 104. A disaggregator 144 receives the host downstream portion 132 and separates the aggregated encoded data and clock signal bits into one or more of the encoded bursty stream, isochronous stream, and available bit rate stream. The bursty stream decoder 142 may further decode any codeword of the bursty stream to recover and output the state transitions of the bursty stream. In addition or in the alternative, the disaggregator 144 may use the clock phase decoder 109 to decode the clock edge count, timing interval, and data value information from each stream to reconstruct the sampling clock and data from each stream, and to output the bits of the bursty stream, isochronous stream and available bit rate stream as respective streams.

In similar fashion, the reception circuit 150 of the host 100 may subsequently receive the receiver upstream portion 134 of the frame 130 at a receiver 152 after a propagation delay over the serial communication link 104. A disaggregator 156 separates the aggregated encoded data and clock signal bits into one or more of the encoded bursty stream, isochronous stream, and available bit rate stream. The bursty stream decoder circuit 138 may further decode any codeword of the bursty stream to recover and output the state transitions of the bursty stream. In addition or in the alternative, the disaggregator 156 may use the clock phase decoder 107 to decode the clock edge count, timing interval, and data value information from each stream to reconstruct the sampling clock and data from each stream, and to output the bits of the bursty stream, isochronous stream and available bit rate stream as respective streams. In an example, the transmission based on the disclosed framing and coding results in a half-duplex communication between the host 100 and receiver 102 over the serial communication link 104 while maintaining latency and jitter requirements for the transmitted streams.

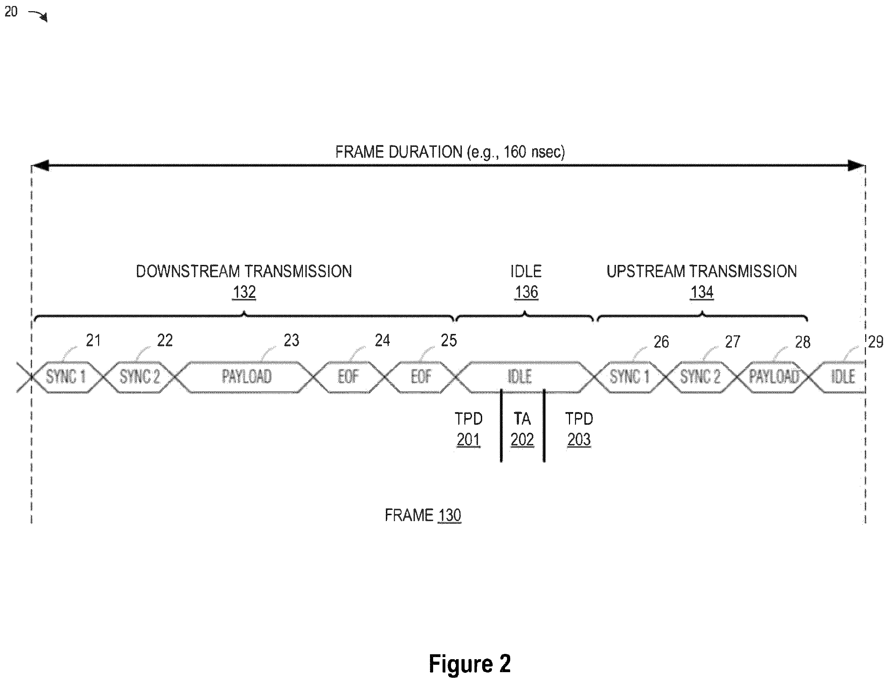

To provide an improved understanding of selected embodiments of the present disclosure, reference is now made to Figure 2 which depicts a simplified timing diagram 20 of an example radio frequency frame 130 which may be transmitted over the serial communication link 104. The frame 130 which include the host downstream transmission portion 132, idle period 136, and a receiver upstream transmission portion 134, and may also include a plurality of subframes which carry synchronization content, control information, and content of a stream. Further, the frame 130 may have a specified duration (e.g., 160 nsec) to maintain the latency and jitter requirements for the transmitted streams. In an example where the host 100 initiates transmission of the frame 130, the downstream transmission portion 132 of the frame 130 may include one or more synchronization fields 21, 22. A synchronization field 21, 22 may each have a specified duration (e.g., 2 nsec) and may include a plurality of clock transitions to synchronize a device clock of the receiver 102 before receiving the downstream transmission portion 132. A payload field 23 may follow the synchronization field(s) 21, 22 to indicate a format of the frame 130 in a header, such as which subframes are included in the downstream transmission portion 132 and upstream transmission portion 134. The payload field 23 may include one or more of the codewords or bits corresponding to a stream, depending on the format of the frame 130, followed by an end of frame (EOF) signaling field 24, 25.

The upstream transmission portion 134 of the frame 130 may also include one or more synchronization fields 26, 27 and a payload field 28. In an example, the payload field 28 may not include any header and include one or more of codewords or bits corresponding to a stream. The frame 130 may also include an idle period 136 between the downstream transmission portion 132 and the upstream transmission portion 134 and between frames. In an example, the idle period 136 between a host downstream transmission portion 132 and host upstream transmission portion 134 may define a first transmit propagation delay (TPD) field 201 of a specified duration (e.g., 2 unit intervals (UI)) for the host downstream transmission portion 132 to reach the receiver 102 from the host 100 over the serial communication link 104. Further, the idle period 136 may include a turnaround time (TA) field 202 of a specified duration (e.g., 2 UI) for a transceiver in the receiver 102 to transition from a receive mode (to receive the host downstream transmission portion 132) to a transmit mode (to transmit the device upstream transmission portion 134). Still further, the idle period 136 may include a second TPD field 203 for the receiver upstream transmission portion 134 to reach the host 100 from the receiver 102 over the serial communication link 104. In an example, a transmit propagation delay may be 5.5 nsec from host 100 to receiver 102 and vice versa and the turnaround time may be 4.5 nsec. An idle period 29 at an end of the receiver upstream transmission portion 134 may also define the TPD/TA/TPD for a transceiver of the host 100 to receive a next frame and transition from receive mode to transmit mode.

As will be appreciated, there are a number of challenges and constraints with aggregating multiple input audio streams for (wired or wireless) transport over serial communication link 104. For example, each incoming stream is a continuous clock and data stream which is generated externally to the host 100, but must be sent over a serial communication link 104 which operates using another independent reference clock. In addition, the outgoing stream must also be a continuous clock and data stream which is generated by the receiver 102 with an independent reference clock. Conventional solutions for aligning the independent reference clocks would require an elastic buffer which uses special symbols to be added or deleted in each stream. Other solutions require a bit level re-timer architecture at the receiver 102 where the incoming clock or data phase information is used to derive the transmit clock from the host 100. These challenges are exacerbated when multiple incoming streams are received and aggregated at the host 100 for transmission over the serial communication link 104 to the receiver 102.

In order to address these challenges and others known to persons skilled in the art, there is disclosed herein a low latency, low bandwidth serial channel encoding and decoding method, system and apparatus for sending an isochronous or bursty stream having clock and data stream signals across a single serial communication link or channel by encoding clock phase information with the data stream signal(s) so that receiver can use the clock phase information to reconstruct the clock and data stream signals without adding, deleting, or modifying any bits. As a result, the reconstructed stream has the same average rate as the rate of the incoming stream and also meets a required data jitter specification without having any gaps in between. The disclosed serial channel encoding/decoding scheme can be adjusted to meet a range of ppm or frequency tolerance. By using a frame-based architecture to convey encoded clock phase information with data values within message frames, multiple data streams can be aggregated over a serial communication link using half duplex or dual simplex communication messages. In addition, the selective encoding of clock phase and data values in message frames can be used to optimize the bandwidth allocation.

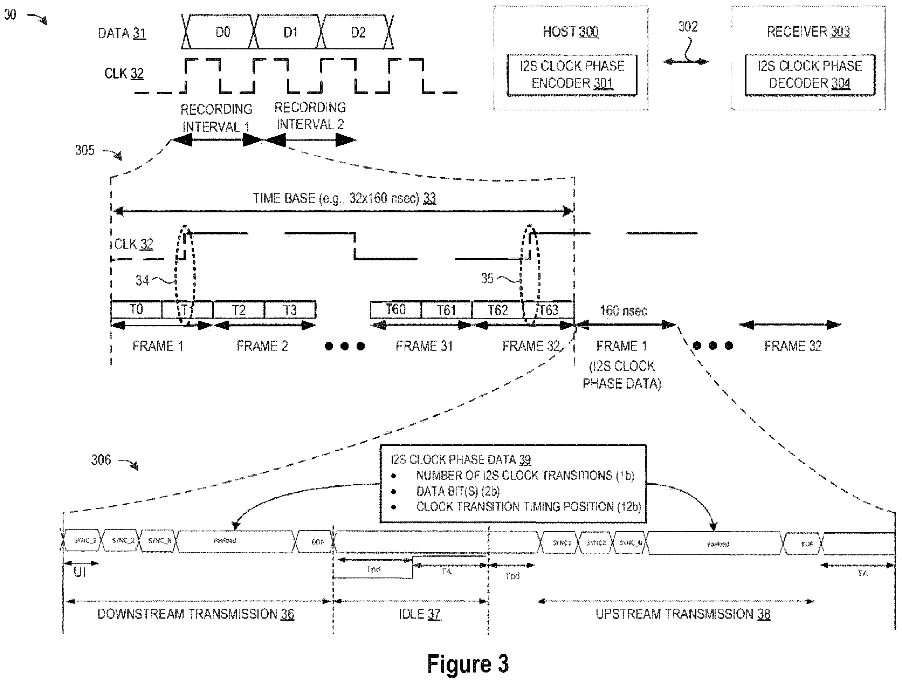

For an improved understanding of selected embodiments of the present disclosure, reference is now made to Figure 3 which depicts a sequence of timing diagrams 30 to illustrate I2S clock phase encoding of data and clock stream signals 31, 32 by a host device 300 for transmission over a re-clocked serial channel 302 to a receiver 303. In an example, the I2S clock phase encoding may be performed by an encoder 301 at the host 300, and I2S clock phase decoding may be performed by a decoder 304 at the receiver 303. Though not shown, it will be appreciated that the receiver may also include an I2S clock phase encoder for encoding data and clock streams that are transmitted over the re-clocked serial channel 302 to the host 300 which includes an I2S clock phase decoder for decoding and reconstructing the data and clock streams. For example, the data and clock stream signals 31, 32 may be part of an isochronous or bursty stream or any latency sensitive data stream, such as an I2S audio stream.

Generally speaking, the I2S clock phase encoder 301 may be configured to determine when the clock signal 32 has a defined clock edge transition, such as a rising clock edge. To this end, the I2S clock phase encoder 301 may be configured to count the number of defined (e.g., rising) I2S clock edges in the clock signal 32 that occur during a defined recording interval or time base (T). In addition, the I2S clock phase encoder 301 may be configured to detect one or more defined time intervals of the recording interval/time base when any defined I2S clock edge is detected. Any clock edge transition may be indicated in as little as an 80 ns interval or multiple of the 80 ns interval. Note that this interval is decided based on the receive jitter per bit that can be tolerated. To this end, the I2S clock phase encoder 301 may include a sampling phase counter (not shown) which is configured to be synchronous with the defined recording interval/time base (T) to detect one or more 80 ns time intervals (e.g., T0-T63) of the time base when a defined I2S clock edge is detected. By encoding the count and timing interval(s) of the defined I2S clock edge(s) along with the data value corresponding to each defined clock edge, the I2S serial channel encoder can transmit isochronous or bursty data streams over a multiplexed wired or wireless communication link to a receiver.

In particular, the I2S clock phase encoder 301 may encode, for each recording interval/time base (e.g., Recording Interval 1), the data value(s) (from data signal 31) and corresponding I2S clock edge count and timing interval(s) of the defined I2S clock edge(s) with respect to a start time and duration of a frame 306 that will be transmitted to the receiver 303. In the depicted example, the I2S clock phase encoder 301 evaluates the clock signal 32 against a sequence of recording intervals (e.g., Recording Interval 1, Recording Interval 2, etc.). As shown with the enlarged timing diagram excerpt 305, each recording interval has a time base (e.g., 32x160 nsec) that is selected to ensure that no more than two defined I2S clock edges are detected during the recording interval. In addition, the recording interval is divided into a predetermined number of frames (e.g., Frames 1-32) and defined time intervals (e.g., T0-T63) which the I2S clock phase encoder 301 uses to detect when any defined clock edge occurs. For example, the enlarged timing diagram excerpt 305 shows that the clock signal 32 has two rising I2S clock edges that occur at the T1 and T63 defined time intervals. The detected number and timing location of the I2S clock edge(s) may be encoded with the corresponding value(s) from the data signal 31 in a multi-bit I2S clock phase data codeword that is inserted in the frame 306 that is transmitted by the host 300 over the re-clocked serial channel 302 to the receiver 303 to maintain the transition jitter requirement. In particular, the host 300 may transmit the downstream transmission portion 36 of frame 306 with includes the multi-bit I2S clock phase data codeword 39 in a payload portion. A receiver 303 which receives the downstream transmission portion 36 of the frame 306 will decode the multi-bit I2S clock phase data codeword 39 and determine the encoded data value(s) and corresponding timing of the I2S clock edge transition(s) within the duration of the frame that is received and corresponding measurement time interval to generate a decoded clock signal with the clock edge transition(s) at the indicated time.

As will be appreciated, the receiver 303 may also include an I2S clock phase encoder which encodes any upstream data and clock signals to be conveyed over the re-clocked serial channel 302 by detecting and encoding the number and timing location of the I2S clock edge(s) in the upstream clock signal with the corresponding data value(s) in a multi-bit I2S clock phase data codeword that is inserted in the upstream transmission portion 38 of the frame 306 that is transmitted by the receiver 303 over the re-clocked serial channel 302 to the host 300. In particular, the receiver 303 may transmit the upstream transmission portion 38 of frame 306 with includes the multi-bit I2S clock phase data codeword 39 in a payload portion. At the host 300, the upstream transmission portion 38 of the frame 306 is processed to decode the multi-bit I2S clock phase data codeword 39 and determine the encoded data value(s) and corresponding timing of the I2S clock edge transition(s) within the duration of the frame that is received and corresponding measurement time interval to generate a decoded clock signal with the clock edge transition(s) at the indicated time. In selected embodiments, the multi-bit I2S clock phase data codeword 39 would clock phase data would only be included in one or the other of the downstream transmission packet 36 or upstream transmission packet 338 unless it was a conversation and therefore bidirectional.

The end-to-end latency can be broadly split into transmit latency and receive latency. The transmit latency is the amount of time elapsed between sampling the detected I2S clock edge transition and time required to pack it in the subsequent frame slot present in the next recording interval. One way would be to pack both the clock edge timing and data information (since a maximum of 2 edges are possible) in the first frame of the next recording interval. This would result in a worst-case latency of approximately one recording interval. Another way would be to pack the edge/data information in the next subsequent frame slot irrespective of recording interval. In one such case where the host 300 or receiver 303 may wait for 80 UI to encode any detected I2S clock edge transitions in the final defined time interval (e.g., T63), the multi-bit I2S clock phase data codeword 39 may be transmitted in the downstream transmission portion of a subsequent frame (e.g., Frame 1 from Recording Interval 2), resulting in the decoded stream having a transmit latency of 160 nsec. The receive latency is decided based on when the edge and data information is read out from the receive FIFO. In one case, the contents of the FIFO are read at least after receiving the clock edge and data information of one entire recording interval. This would mean a worst-case receive latency of one recording interval. This may be needed so that, while reconstructing the I2S audio stream, the receiver has added information of the duration of clock period. Another way to optimize the receive latency would be to exchange the clock period information in the beginning and then reading out the contents of receive FIFO immediately once the edge and data information is received. However in doing so, care must be taken to keep some margin to account for I2S clock edge drift (both the I2S clock and sampling local clock) with temperature and other such variations which might cause the I2S clock edge information to come later than the expected average clock period interval as estimated by clock phase decoder.

While it will be appreciated that specific details of the present disclosure can be modified or adjusted to fit the differing needs and requirements for transporting one or more data streams over a serial communication channel, the following description is provided to illustrated selected embodiments for providing a low latency, low bandwidth method, system and apparatus for sending an isochronous or bursty stream having clock and data stream signals across a single serial communication link or channel.

In an example I2S audio stream transport embodiment, each frame (e.g., frame 306) that is transmitted by the host 300 or receiver 303 is assumed to have a total frame length duration of 80 unit intervals (UI) which translates to 160 nsec. To support bidirectional communication between the host 300 and receiver 303, the re-clocked serial channel 302 may operate at 500Mbps as a half-duplex link, but can be extended to dual simplex links in other embodiments. With an audio stream transport application, an analog-to-digital converter may be configured with a sampling clock rate (Fs) of 8KHz to generate 32 data bits at each audio sample. In order to convey each group of 32 data bits over the serial channel 302, the I2S clock frequency (SCK) for the clock signal 32 has a frequency of 32x8KHz = 256KHz, and each of the 32 data bits is presented as a 1-bit data value in the data signal 31 at every positive edge of the clock signal 32. In the I2S protocol, there is also a 1-bit word select (WS) signal that can be treated as data. At the host 300, there can be variations in the I2S clock frequency over time. For example, a frequency variation of +/-10% results in the clock signal 32 having a minimum period (Period _min) of 3.55µs and maximum period (Period _max) of 4.34µs. It is important to account for the clock signal frequency variation since the host 300 uses a first independent local transmit clock to transmit each frame, and the receiver 303 tracks each received frame using a second independent receive clock when performing clock data recovery (CDR) on the received frame

To account for clock signal variation, the present disclosure provides a mechanism for the host 300 to forward I2S clock phase information along with the data to the receiver 303 which extracts and uses the clock phase information to reproduce the clock and the data with a specified jitter tolerance. To this end, the I2S clock phase encoder 301 is configured with a time base (T) that is chosen to accommodate a maximum of 2 rising transitions of an I2S clock signal 32, and which is at least as long as the maximum period of I2S clock. In addition, the time base is evaluated with reference to a defined number of frames, such as Frames 1-32 shown in the enlarged timing diagram excerpt 305. It is to be noted in this example that the length of each frame is smaller than the period for the I2S clock signal 32. If each frame (e.g., frame 306) has a total frame length duration of 80 unit intervals (UI) which translates to 160 nsec, then the minimum number of frames that can form the time base may be calculated as T (in frames) = ceil(Period_max/160) = ceil(4.34u/160nsec) = 28 frames. For simplicity and ease of implementation, the time base may be defined as 32 frames.

Depending on the jitter that can be tolerated on the receiver 303, a sampling clock frequency for the host 300 is chosen. For example, if the receiver 303 can handle 80ns jitter per bit, the sampling clock period at the host 303 may be 80ns, and the host sampling clock frequency is 12.5MHz. As a result, the incoming I2S clock stream 32 is sampled with a 12.5MHz (80ns) clock derived from the local transmit clock at the hosts 300.

In addition, the I2S clock phase encoder 301 is configured with a defined time interval value so that the time base/recording interval may be divided into a plurality of time interval slots for detecting any I2S clock edge transition. As shown in the enlarged timing diagram excerpt 305, the number of defined 80ns time interval slots Ti within the time base is (32 frames)*(160 nsec/frame)/80 nsec = 64. This is indicated with the identified time intervals (e.g., T0-T63).

In order to detect when a rising transitions of an I2S clock signal 32, the I2S clock phase encoder 301 may include a sampling phase counter that is synchronous to the 160 nsec time base and that can count from 0 to 63. Any time a rising transition in the I2S clock signal 32 is detected, the I2S clock phase encoder 301 records the value of the sampling phase counter. In the example shown in the enlarged timing diagram excerpt 305, the I2S clock phase encoder 301 detects rising transitions of the I2S clock signal 32 at the T1 and T63 defined time intervals, as indicated with the dotted lines 34, 35.

For each recording interval (e.g.., Recording Interval 1), the I2S clock phase encoder 301 records a multi-bit I2S clock phase data codeword within a time base. In selected embodiments, the multi-bit I2S clock phase data codeword defines one bit for specifying the number of I2S clock transitions within the recording interval. In this example, there are only two possible transition count values - 1 or 2 - so only a single bit is required. In addition, the multi-bit I2S clock phase data codeword may define a maximum of two bits for specifying up to two data values. In this example, one data bit is required if there is only one data value clocked in the time interval, and two data bits are required if there are two data values clocked in the time interval. In addition, the multi-bit I2S clock phase data codeword may define a maximum of two time interval locations for any detected I2S clock transitions during the time interval. In this example, there are 64 possible timer interval locations (T0-T63), so twelve bits are required for specifying up to two possible I2S clock transition time intervals.

As seen from the foregoing, the I2S clock phase encoder 301 generates a multi-bit I2S clock phase data codeword that includes a total of 1+2+12 = 15 bits to encode the data values, clock transition count, and clock transition time intervals for each recording interval (time base) which spans 32 frames. As a result, the total required bandwidth is approximately equal to (15 bits)/((32 frames)*(160 nsec/frame)*(1e-9s/nsec)) = 2.92 Mbps.

At the receiver 303, the I2S clock phase decoder 304 is configured to re-construct the clock and data by receiving and processing the multi-bit I2S clock phase data codeword. To the end, the I2S clock phase decoder 304 may include an independent receiver reference clock, a receiver FIFO and a phase counter which operates on the independent receiver reference clock at the receiver 303. When the receiver 303 receives a frame containing the multi-bit I2S clock phase data codeword with the timing interval position(s) and number of clock transitions present in one recording interval, the I2S clock phase decoder 304 stores the clock phase information, along with the data corresponding to each clock transition, in the receiver FIFO which is operating in receiver's clock domain. In this example, the clock phase information is stored in the receiver FIFO as a sampling phase count value that corresponds to a timing interval (e.g., T1) in the time base. The I2S clock phase decoder 304 will use this information to reconstruct the original stream in the receiver's clock domain. In particular, the I2S clock phase decoder 304 enables the phase counter to increment a counter with every clock transition of the independent receiver clock and to generate a first clock transition (e.g., rising transition) whenever the phase counter reaches a sampling phase count value stored in the FIFO.

At the receiver 303, the clock period of the I2S clock signal 32 may be determined by computing the difference between the sampling phase count values of two successive transitions, and then continuously updating the clock period every time there are 2 clock phase transitions within a time base. If "N" is the computed clock period count, then the I2S clock phase decoder 304 may run a clock counter operating on a derived 80ns receive clock so that the clock counter counts from 0 to N-1, and is restarted every time data is placed on the output of the receiver 303. While any suitable duty cycle may be used for the reconstructed I2S clock signal, the I2S clock phase decoder 304 may be configured to reconstruct the I2S clock signal with a 50% duty cycle by generating a falling clock edge transition when the clock counter reaches half of the clock period (N/2).

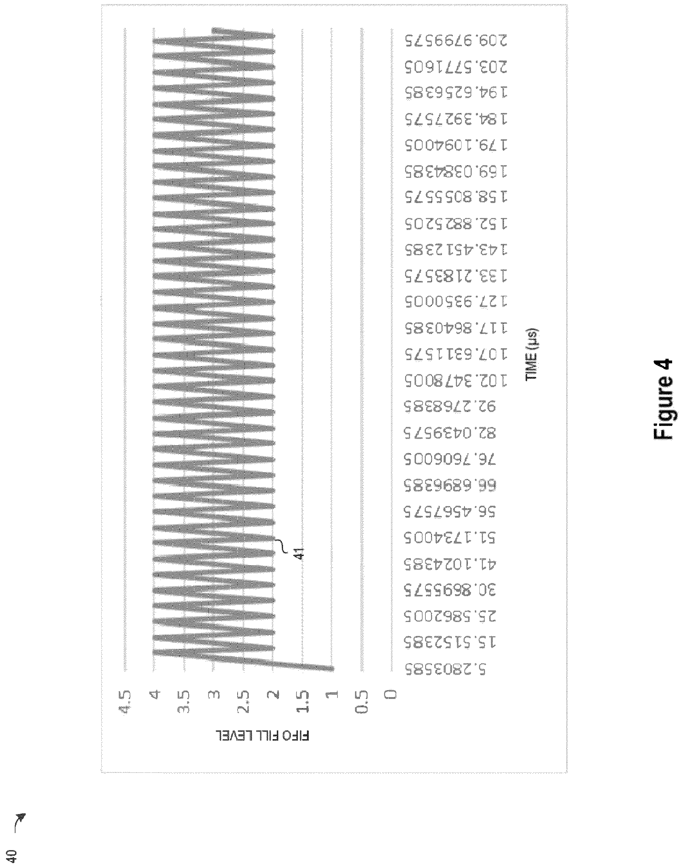

As disclosed herein, every time an I2S frame (e.g., 306) is received at the receiver 303, the I2S clock phase decoder 304 may load the receiver FIFO with multi-bit I2S clock phase data codeword 39 which specified clock phase information for the previous time base/recording interval. In addition, the I2S clock phase decoder 304 may be configured to read this information from the receiver FIFO once every time base. To illustrate use and operation of the receiver FIFO, reference is now made to Figure 4 which illustrates a timing diagram 40 showing the fill level 41 of a receive FIFO used to decode I2S clock phase data in accordance with selected embodiments of the present disclosure. The indicated fill level 41 refers to the number of bits stored in the receiver FIFO, and is the difference between the write and read pointer (which is also an indication of information yet to be read out from the receiver FIFO). As illustrated, multi-bit I2S clock phase data codewords are sequentially loaded into the receiver FIFO every time a frame 306 is received at the receiver 303. In addition, the multi-bit I2S clock phase data codewords stored in the receiver FIFO are read out once every time base. In Figure 4, this is illustrated, beginning at a start time (e.g., t=5.2803585 µs) when the receiver FIFO fill level 41 begins with the sequential storage of 4 bits. As each multi-bit I2S clock phase data codeword is read out of the receiver FIFO (e.g., every 10.070962 µs), the fill level 41 drops back to 2 bits, and then bounces between 2 and 4 bits as data is fed into and read out from the receiver FIFO. The fill level 41 shows that there are no data gaps on the receiver 303 since the receiver FIFO is managed to prevent underruns of data and to prevent data backup which cause a latency problem.

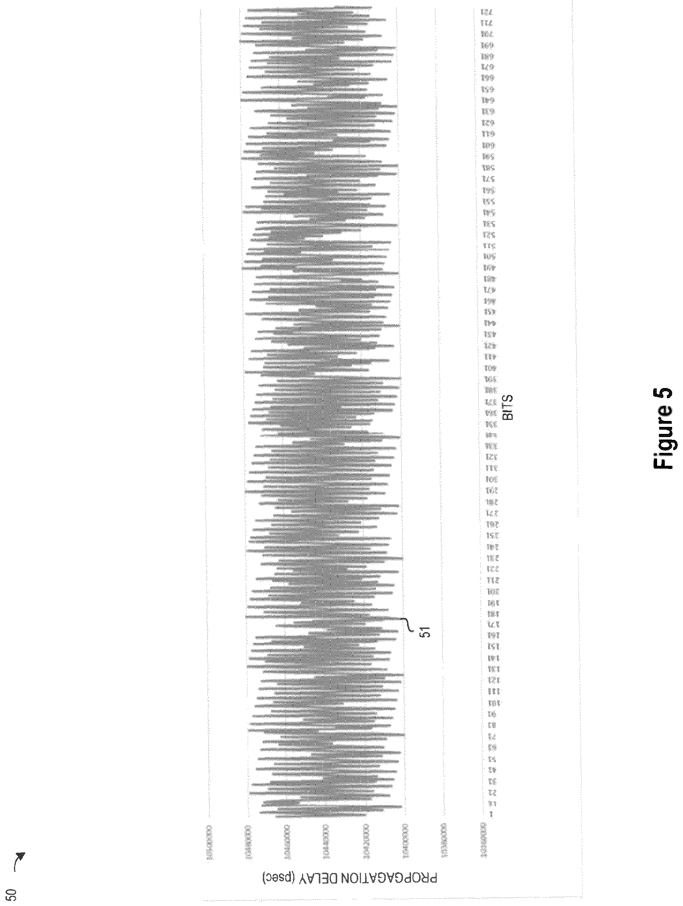

To further illustrate the operation of selected embodiments of the present disclosure, reference is now made to Figure 5 which is a diagram 50 showing the propagation delay in picoseconds (psec) 51 versus bits for a received stream. From the depicted propagation delay 51 which stays between 10400000 psec and 10480000 psec, it can be seen that the data jitter per bit is within 80ns for the specified example.

As seen from the foregoing, the clock and data signals for an I2S stream which has an I2S bit clock frequency of 256KHz can be encoded and aggregated for transport over a single serial channel by adding a signaling overhead bandwidth of approximately 2.92Mbps which is approximately 10 times the I2S bit clock frequency. Indeed, this rule of thumb holds true for other I2S bit clock frequencies, as shown in Table 1 below:

**Table 1 - Bandwidth Requirement for Aggregation**

| I2S bit clock frequency | Approximate signaling overhead bandwidth required |
|---|---|
| 256KHz | 3Mbps |
| 352.8KHz | 4.7Mbps |
| 12.288MHz | 127Mbps |

As will be appreciated, the required signaling overhead bandwidth is a critical parameter that may affect overall system performance. In order to reduce the required signaling overhead bandwidth, the generation and transport mechanism of the multi-bit I2S clock phase data codeword may be modified to effectively reduce the transmission of clock phase information that is a major part of the 15-bit I2S clock phase data that is transmitted once every recording interval (which is also equivalent to a duration of 32 aggregated frames that are transmitted over wired or wireless link).

In selected embodiments where the jitter specification at the receiver 300 can be relaxed, then the required signaling overhead bandwidth can be reduced by sending the clock phase transition information less frequently. For example, the multi-bit I2S clock phase data codeword can be transmitted on alternating recording intervals or some other predetermined intermittent basis.

In addition or in the alternative, the quantity of clock phase information can be reduced to fewer bits by sending only a difference value compared to a computed average clock period instead of sending the absolute value of clock transitions, thereby exploiting the slower rate of change of average period in overall system.

In addition or in the alternative, the required signaling overhead bandwidth can be reduced by defining two different types of frames, where a first frame type (Frame Type 1) includes clock phase information that is conveyed with 15 bits, and where a second frame type (Frame Type 2) does not include clock phase information and is conveyed with only 4 bits. In this approach, the host 300 sends a plurality of Type 1 frames so that the receiver 303 can infer the clock period by computing the difference in the clock phase sample count values. Subsequently, the host 300 reduces the frequency of transmitting Type 1 frames, and instead transmits Type 2 frames to the receiver 300. In an example sequence illustrated below with Table 2, the jitter impact is charted for reducing the frequency of transmitting Type 1 frames from 100% (where only Type 1 frames are sent every 32 frames) to 50% (where Type 1 and Type 2 frames are alternated), and on down to 6.25% (where Type 1 frames are sent every 512 frames and Type 2 frames are otherwise sent).

**Table 2 -- Bandwidth Comparison with Jitter**

| **Clock phase frame frequency (per time base) in %** | **BW in Mbps** | **Jitter (in ns)** |
|---|---|---|
| 100 | 2.9296875 | 80 |
| 50 | 1.85546875 | 200 |
| 25 | 1.318359375 | 400 |
| 12.5 | 1.049804688 | 800 |
| 6.25 | 0.915527344 | 1600 |

As seen from Table 2, as the frequency of Type 1 frames is reduced, the required signaling overhead bandwidth also reduces, but the jitter increases. As will be appreciated, the I2S clock phase encoder 301 can be programmed with control parameters for making the desired tradeoff between signaling overhead bandwidth and jitter performance.

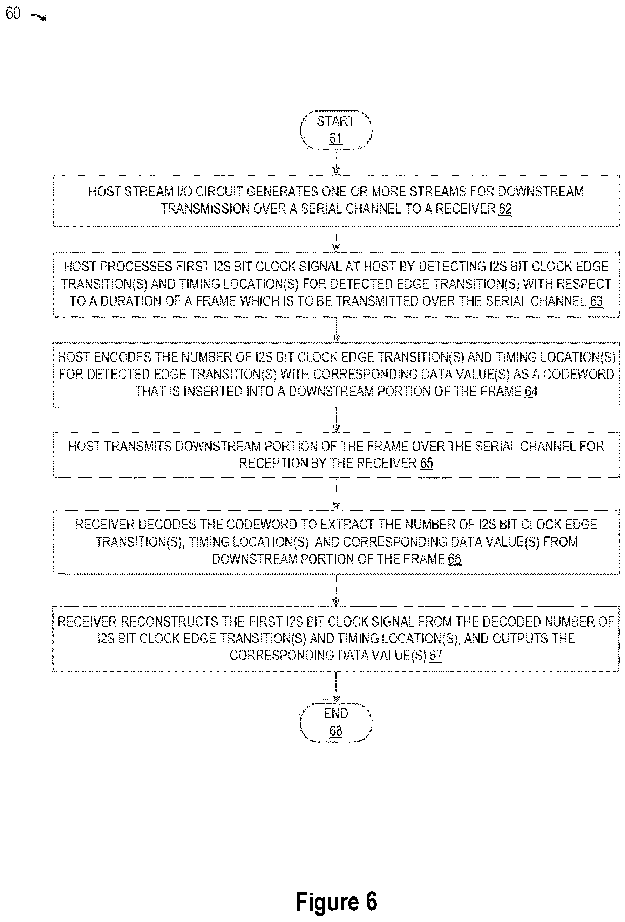

For an improved understanding of the present disclosure, reference is now made to Figure 6 which depicts a simplified process flow 60 for encoding and transmitting I2S clock phase data in a downstream portion of a frame sent over a single (wired or wireless) serial communication link. As disclosed herein, the recited "host" and "receiver" steps 61-68 may be performed, respectively, at the host 101 and receiver 102. Alternatively, the recited "host" steps may be performed at the receiver 102, and the recited "receiver" steps may be performed at the host 101. As a result, the depicted encoding and transmission of I2S clock phase data can be sent in an upstream portion of a frame sent over a single (wired or wireless) serial communication link.

Once the method starts (step 61), a stream I/O circuit at the host generates one or more streams for downstream transmission over a serial channel to a receiver at step 62. A stream may be a bursty stream such as a USB stream, an isochronous stream, or an available bit rate stream. At 63, a host processes a first I2S bit clock signal at the host by detecting one or more I2S bit clock edge transitions and associated timing location(s) for the detected edge transition(s) with respect to a duration of a frame which is to be transmitted over the serial channel. The detected I2S bit clock edge transition may be a rising clock edge or a falling clock edge that occurs within the duration of the frame. At 64, the host encodes the number of I2S bit clock edge transitions, the associated timing location(s) for the detected edge transition(s), and the corresponding data value(s) into the codeword that is inserted into a downstream portion of a frame. In selected embodiments, the codeword may be a 15-bit codeword where in one bit identifies whether there are one or two edge transitions, two bits identify the value for up to two data values, and twelve bits identifies up to two different timing locations for the detected edge transition(s). At 65, the host transmits the downstream portion of the frame over the serial channel for reception by the receiver. In selected embodiments, the downstream portion of the frame includes a payload in which the codeword is inserted. At 66, the receiver decodes the codeword to extract the number of I2S bit clock edge transitions, the associated timing location(s) for the detected edge transition(s), and the corresponding data value(s) from the downstream portion of the frame. At step 67, the receiver reconstructs the first I2S bit clock signal from the decoded number of I2S bit clock edge transitions and the associated timing location(s) for the detected edge transition(s), and outputs the corresponding data value(s). At 68, the method ends.

Selected embodiments of the present disclosure are described with reference to an I2S system where an analog-to-digital converter (ADC) takes an n-bit audio sample (a word) that is sent a serial link that is "n" times faster than the ADC sampling clock, and then an n-bit digital-to-analog converter (DAC) receives and processes the "n" bits to recreate the analog audio signal. Therefore, the I2S SCLK serial bit clock is not the key frequency. Instead, the I2S word clock is the key frequency since this clock is used to sample the n-bits and to recreate the audio from the n-bits. However, it could be argued that the n-bit serial clock has to be the driver and the word clock is a divided down version of the serial bit clock. In that case, any drift in the bit clock results in changes to the word clock. As will be appreciated, it is easier to send smaller incremental updates at the bit clock rate which takes more bandwidth. But to reduce bandwidth by only sending the I2S word clock rising edge timing information is sufficient to recreate the audio. Thus, sending the word clock versus bit clock rising edge timing is acceptable. This can be another way to reduce the amount of bandwidth consumed and can be an extension of the idea which can be left to system designers to weigh in on the bandwidth vs. jitter tradeoff, and more specifically on word clock jitter. But it will be noted that this result is achieved by reducing the frequency of sending clock phase information by factors of 2, 4, 8, etc.

As described hereinabove, the present disclosure provides a low latency and low bandwidth method and apparatus for transferring an isochronous stream (both clock and data) over a multiplexed wired or wireless link without the need to decode the protocol especially in applications where addition or deletion of bits from the stream is not allowed. In selected embodiments, the disclosed method and apparatus can be extended for bursty streams as well without having the need for any elastic buffers.

By now, it should be appreciated that there has been provided a low latency and low bandwidth method, system, and apparatus for sending an isochronous or bursty stream across a multiplexed link and reconstructing both the clock and data stream on the other end. In the disclosed method, a host receives one or more streams, each stream comprising a data signal and bit clock signal for transmission over a serial channel to a receiver. In selected embodiments, the received stream is an isochronous or bursty data stream. In addition, the host detects a count of one or more clock edge transitions in the bit clock signal and timing location for the one or more clock edge transitions with respect to a duration of a frame which is to be transmitted over the serial channel. In selected embodiments, the host detects the count of one or more clock edge transitions in the bit clock signal by counting how many rising clock edge transitions occur in the bit clock signal within a defined recording interval having the duration of the frame which is to be transmitted over the serial channel. In such embodiments, the host may detect the count one or more clock edge transitions by enabling a sampling phase counter which is configured to be synchronous with the defined recording interval to count how many clock edge transitions occur during the defined recording interval. In selected embodiments, the defined recording interval has a duration that is controlled to detect at least one clock edge transition but no more than two clock edge transitions in the bit clock signal. In selected embodiments, the host detects timing location for the one or more clock edge transitions in the bit clock signal by detecting one or more defined time intervals of the defined recording interval when a clock edge transition is detected. In addition, the host codes the count of one or more clock edge transitions and the timing location for the one or more clock edge transitions with one or more corresponding data values from the data signal into a multi-bit clock phase data codeword. In selected embodiments, the multi-bit clock phase data codeword is 15 bits, including one bit identifying the count of one or more clock edge transitions occurring during the defined recording interval, two bits identifying up to two data values from the data signal, and twelve bits identifying up to two defined time intervals of the defined recording interval where any clock edge transition occurs during the defined recording interval. In addition, the host inserts the multi-bit clock phase data codeword into a portion of the frame. In addition, the host transmits the portion of the frame over the serial channel to the receiver. In selected embodiments, the disclosed method, system and apparatus may also include receiving, at the receiver, the portion of the frame which is transmitted over the serial channel. In such embodiments, the receiver decodes the multi-bit clock phase data codeword to extract the count of one or more clock edge transitions in the bit clock signal, the timing location for the one or more clock edge transitions, and the one or more corresponding data values. In addition, the receiver generates a reconstructed data signal and bit clock signal from the count of one or more clock edge transitions in the bit clock signal, the timing location for the one or more clock edge transitions, and the one or more corresponding data values.

In another form, there has been provided a transmitting device for sending an isochronous or bursty stream across a low latency and low bandwidth serial channel for reconstructing a clock and data stream on the receiving end. The disclosed transmitting device includes a stream circuit arranged to receive one or more streams, each comprising a data signal and bit clock signal for transmission over a serial channel. In selected embodiments, the stream(s) may be an isochronous or bursty data stream. The disclosed transmitting device also includes a clock phase encoder arranged to detect a count of one or more clock edge transitions in the bit clock signal and timing location for the one or more clock edge transitions with respect to a duration of a frame which is to be transmitted over the serial channel and to code the count of one or more clock edge transitions and the timing location for the one or more clock edge transitions with one or more corresponding data values from the data signal into a multi-bit clock phase data codeword. In selected embodiments, the clock phase encoder detects the count of one or more clock edge transitions in the bit clock signal that occur within a defined recording interval having the duration of the frame which is to be transmitted over the serial channel. In other selected embodiments, the clock phase encoder includes a sampling phase counter which is configured to be synchronous with a defined recording interval having the duration of the frame which is to be transmitted over the serial channel, and which is enabled to count how many clock edge transitions occur within the defined recording interval. In other selected embodiments, the defined recording interval has a duration that is controlled to detect at least one clock edge transition but no more than two clock edge transitions in the bit clock signal. In other selected embodiments, the clock phase encoder detects timing location for the one or more clock edge transitions in the bit clock signal by detecting one or more defined time intervals of the defined recording interval when a clock edge transition is detected. In addition, the disclosed transmitting device includes an aggregator arranged to insert the multi-bit clock phase data codeword into a portion of the frame. In selected embodiments, the aggregator multiplexes, into the portion of the frame, the multi-bit clock phase data codeword corresponding to a first stream with one or more additional multi-bit clock phase data codewords corresponding to one or more additional streams. In other selected embodiments, the aggregator is connected and configured with a transmitter circuit to insert the multi-bit clock phase data codeword into a payload portion of a downstream transmission portion of an inter-IC sound (I2S) aggregated frame which may be transmitted over a wired or wireless serial channel. The disclosed transmitting device also includes a transmitter arranged to transmit the portion of the frame over the serial channel. In selected embodiments, the multi-bit clock phase data codeword includes one bit identifying the count of one or more clock edge transitions in the bit clock signal that occur within a defined recording interval having the duration of the frame which is to be transmitted over the serial channel, two bits identifying up to two data values from the data signal which correspond to the one or more clock edge transitions in the bit clock signal, and a plurality of bits identifying up to two defined time intervals of the defined recording interval where any clock edge transition occurs during the defined recording interval.

In yet another form, there has been provided a receiving device for receiving an isochronous or bursty stream across a low latency and low bandwidth serial channel for reconstructing a clock and data stream. The disclosed receiving device includes a receiver circuit connected and configured to receive one or more frames that are transmitted over a serial channel by a transmitting device, where each frame comprises a multi-bit clock phase data codeword. As disclosed, the multi-bit clock phase data codeword specifies: (1) a count of one or more clock edge transitions within a defined recording interval having a duration of the frame which is received over the serial channel, (2) timing location information for the one or more clock edge transitions within the defined recording interval, and (3) one or more corresponding data signal values corresponding to the one or more clock edge transitions. The disclosed receiving device also includes a disaggregator connected and configured to separate the multi-bit clock phase data codewords received in the one or more frames and to decode each multi-bit clock phase data codeword into an output stream having a reconstructed data signal and reconstructed bit clock signal that is generated from the count of one or more clock edge transitions within the defined recording interval and the timing location information for the one or more clock edge transitions within the defined recording interval. In selected embodiments, the output stream is an isochronous or bursty data stream. In other selected embodiments, the disaggregator is connected and configured to generate a reconstructed data signal corresponding to each of the one or more clock edge transitions.

Selected embodiment implementations have been described in detail above, but it will be appreciated that various modifications are possible. The disclosed subject matter, including the functional operations described in this specification, can be implemented in electronic circuit, computer hardware, firmware, software, or in combinations of them, such as the structural means disclosed in this specification and structural equivalents thereof, including potentially a program operable to cause one or more content processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

One or more embodiments of the present disclosure may include features recited in the following numbered clauses:
1. A method comprising: receiving one or more streams, each stream comprising a data signal and bit clock signal for transmission over a channel; detecting a count of one or more clock edge transitions in the bit clock signal and timing location for the one or more clock edge transitions in a frame which is to be transmitted over the channel; coding the count of one or more clock edge transitions and the timing location for the one or more clock edge transitions into a multi-bit clock phase data codeword; inserting the multi-bit clock phase data codeword into a portion of the frame; and transmitting the portion of the frame over the channel to a receiver.
2. The method of clause 1, wherein receiving one or more streams comprises receiving an isochronous or bursty data stream, and where transmitting the portion of the frame comprises transmitting the portion of the frame over a serial channel to the receiver.
3. The method of clause 1, wherein detecting the count of one or more clock edge transitions in the bit clock signal comprises counting how many rising clock edge transitions occur in the bit clock signal within a defined recording interval having a duration of the frame which is to be transmitted over the channel.
4. The method of clause 3, wherein detecting the count of one or more clock edge transitions in the bit clock signal comprises enabling a sampling phase counter which is configured to be synchronous with the defined recording interval to count how many clock edge transitions occur during the defined recording interval.
5. The method of clause 3, wherein the defined recording interval has a duration that is controlled to detect at least one clock edge transition but no more than two clock edge transitions in the bit clock signal.
6. The method of clause 1, wherein detecting timing location for the one or more clock edge transitions in the bit clock signal comprises detecting one or more defined time intervals of the defined recording interval when a clock edge transition is detected.
7. The method of clause 6, where the multi-bit clock phase data codeword is 15 bits, including one bit identifying the count of one or more clock edge transitions occurring during the defined recording interval, two bits identifying up to two data values from the data signal, and twelve bits identifying up to two defined time intervals of the defined recording interval where any clock edge transition occurs during the defined recording interval.
8. The method of clause 1, further comprising: receiving, at the receiver, the portion of the frame which is transmitted over the channel; decoding, at the receiver, the multi-bit clock phase data codeword to extract the count of one or more clock edge transitions in the bit clock signal, the timing location for the one or more clock edge transitions, and one or more corresponding data values from the data signal; and generating, at the receiver, a reconstructed data signal and bit clock signal from the count of one or more clock edge transitions in the bit clock signal, the timing location for the one or more clock edge transitions, and the one or more corresponding data values.
9. A transmitting device comprising: a stream circuit arranged to receive one or more streams, each comprising a data signal and bit clock signal for transmission over a channel; a clock phase encoder arranged to detect a count of one or more clock edge transitions in the bit clock signal and timing location for the one or more clock edge transitions in a frame which is to be transmitted over the channel and to code the count of one or more clock edge transitions and the timing location for the one or more clock edge transitions into a multi-bit clock phase data codeword; an aggregator arranged to insert the multi-bit clock phase data codeword into a portion of the frame; and a transmitter arranged to transmit the portion of the frame over the channel.
10. The transmitting device of clause 9, wherein the one or more streams are an isochronous or bursty data stream.
11. The transmitting device of clause 9, wherein the clock phase encoder detects the count of one or more clock edge transitions in the bit clock signal that occur within a defined recording interval having a duration of the frame which is to be transmitted over the channel.
12. The transmitting device of clause 9, wherein the clock phase encoder comprises a sampling phase counter which is configured to be synchronous with a defined recording interval having a duration of the frame which is to be transmitted over the channel, and which is enabled to count how many clock edge transitions occur within the defined recording interval.
13. The transmitting device of clause 11, wherein the defined recording interval has a duration that is controlled to detect at least one clock edge transition but no more than two clock edge transitions in the bit clock signal.
14. The transmitting device of clause 11, wherein the clock phase encoder detects timing location for the one or more clock edge transitions in the bit clock signal by detecting one or more defined time intervals of the defined recording interval when a clock edge transition is detected.
15. The transmitting device of clause 9, wherein the multi-bit clock phase data codeword comprises one bit identifying the count of one or more clock edge transitions in the bit clock signal that occur within a defined recording interval having a duration of the frame which is to be transmitted over the channel, two bits identifying up to two data values from the data signal which correspond to the one or more clock edge transitions in the bit clock signal, and a plurality of bits identifying up to two defined time intervals of the defined recording interval where any clock edge transition occurs during the defined recording interval.
16. The transmitting device of clause 9, wherein the aggregator multiplexes, into the portion of the frame, the multi-bit clock phase data codeword corresponding to a first stream with one or more additional multi-bit clock phase data codewords corresponding to one or more additional streams.
17. The transmitting device of clause 9, wherein the aggregator is connected and configured with a transmitter circuit to insert the multi-bit clock phase data codeword into a payload portion of a downstream transmission portion of an inter-IC sound (I2S) aggregated frame.
18. A receiving device comprising: a receiver circuit connected and configured to receive one or more frames that are transmitted over a channel by a transmitting device, where each frame comprises a multi-bit clock phase data codeword which specifies: a count of one or more clock edge transitions within a defined recording interval having a duration of the frame which is received over the channel, timing location information for the one or more clock edge transitions within the defined recording interval, and one or more corresponding data signal values corresponding to the one or more clock edge transitions; and a disaggregator connected and configured to separate the multi-bit clock phase data codewords received in the one or more frames and to decode each multi-bit clock phase data codeword into an output stream comprising a reconstructed data signal and reconstructed bit clock signal that is generated from the count of one or more clock edge transitions within the defined recording interval and the timing location information for the one or more clock edge transitions within the defined recording interval.
19. The receiving device of clause 18, wherein the output stream is an isochronous or bursty data stream.
20. The receiving device of clause 18, wherein the disaggregator is connected and configured to generate a reconstructed data signal corresponding to each of the one or more clock edge transitions.

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

Boundaries between the above-described operations are provided as examples. Multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

It should also be noted that at least some of the operations for the methods described herein may be implemented using software instructions stored on a computer-useable storage medium for execution by a computer. As an example, an embodiment of a computer program product includes a computer-useable storage medium to store a computer readable program.

Alternatively, embodiments of the invention may be implemented entirely in hardware or in an implementation containing both hardware and software elements. In embodiments which use software, the software may include but is not limited to firmware, resident software, microcode, etc.

Although the described exemplary embodiments disclosed herein are directed to various methods of operation and apparatus for aggregating and transmitting a plurality of streams having encoded I2S clock and data signals between a host and a device over a serial channel, the present invention is not necessarily limited to the example embodiments which illustrate inventive aspects of the present invention that are applicable to a wide variety of data and clock signal encoding arrangements and various frame parameters. For example, specific embodiments are described herein with reference to an aggregated frame having a duration of 80UI or 160ns, but it will be appreciated that the same idea is applicable to any frame duration that can be decided based on other system requirements or parameters, such as bandwidth, latency, specified jitter limitations, to name a few. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the scope of the invention as defined by the appended claims so that those skilled in the art should understand that they can make various changes, substitutions and alterations without departing from the scope of the invention in its broadest form.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method comprising:
receiving one or more streams, each stream comprising a data signal and bit clock signal for transmission over a channel;
detecting a count of one or more clock edge transitions in the bit clock signal and timing location for the one or more clock edge transitions in a frame which is to be transmitted over the channel;
coding the count of one or more clock edge transitions and the timing location for the one or more clock edge transitions into a multi-bit clock phase data codeword;
inserting the multi-bit clock phase data codeword into a portion of the frame; and
transmitting the portion of the frame over the channel to a receiver.

2. The method of claim 1, wherein receiving one or more streams comprises receiving an isochronous or bursty data stream, and where transmitting the portion of the frame comprises transmitting the portion of the frame over a serial channel to the receiver.

3. The method of any of the preceding claims, wherein detecting the count of one or more clock edge transitions in the bit clock signal comprises counting how many rising clock edge transitions occur in the bit clock signal within a defined recording interval having a duration of the frame which is to be transmitted over the channel.

4. The method of claim 3, wherein detecting the count of one or more clock edge transitions in the bit clock signal comprises enabling a sampling phase counter which is configured to be synchronous with the defined recording interval to count how many clock edge transitions occur during the defined recording interval.

5. The method of claim 3 or 4, wherein the defined recording interval has a duration that is controlled to detect at least one clock edge transition but no more than two clock edge transitions in the bit clock signal.

6. The method of any of the preceding claims, wherein detecting timing location for the one or more clock edge transitions in the bit clock signal comprises detecting one or more defined time intervals of the defined recording interval when a clock edge transition is detected.

7. The method of claim 6, where the multi-bit clock phase data codeword is 15 bits, including one bit identifying the count of one or more clock edge transitions occurring during the defined recording interval, two bits identifying up to two data values from the data signal, and twelve bits identifying up to two defined time intervals of the defined recording interval where any clock edge transition occurs during the defined recording interval.

8. The method of any of the preceding claims, further comprising:
receiving, at the receiver, the portion of the frame which is transmitted over the channel;
decoding, at the receiver, the multi-bit clock phase data codeword to extract the count of one or more clock edge transitions in the bit clock signal, the timing location for the one or more clock edge transitions, and one or more corresponding data values from the data signal; and
generating, at the receiver, a reconstructed data signal and bit clock signal from the count of one or more clock edge transitions in the bit clock signal, the timing location for the one or more clock edge transitions, and the one or more corresponding data values.

9. A transmitting device comprising:
a stream circuit arranged to receive one or more streams, each comprising a data signal and bit clock signal for transmission over a channel;
a clock phase encoder arranged to detect a count of one or more clock edge transitions in the bit clock signal and timing location for the one or more clock edge transitions in a frame which is to be transmitted over the channel and to code the count of one or more clock edge transitions and the timing location for the one or more clock edge transitions into a multi-bit clock phase data codeword;
an aggregator arranged to insert the multi-bit clock phase data codeword into a portion of the frame; and
a transmitter arranged to transmit the portion of the frame over the channel.

10. The transmitting device of claim 9, wherein the one or more streams are an isochronous or bursty data stream.

11. The transmitting device of claim 9 or 10, wherein the clock phase encoder detects the count of one or more clock edge transitions in the bit clock signal that occur within a defined recording interval having a duration of the frame which is to be transmitted over the channel.

12. The transmitting device of any of the preceding claims 9 to 11, wherein the clock phase encoder comprises a sampling phase counter which is configured to be synchronous with a defined recording interval having a duration of the frame which is to be transmitted over the channel, and which is enabled to count how many clock edge transitions occur within the defined recording interval.

13. The transmitting device of claim 11, wherein the defined recording interval has a duration that is controlled to detect at least one clock edge transition but no more than two clock edge transitions in the bit clock signal.

14. The transmitting device of claim 11, wherein the clock phase encoder detects timing location for the one or more clock edge transitions in the bit clock signal by detecting one or more defined time intervals of the defined recording interval when a clock edge transition is detected.

15. A receiving device comprising:
a receiver circuit connected and configured to receive one or more frames that are transmitted over a channel by a transmitting device, where each frame comprises a multi-bit clock phase data codeword which specifies:
a count of one or more clock edge transitions within a defined recording interval having a duration of the frame which is received over the channel,
timing location information for the one or more clock edge transitions within the defined recording interval, and
one or more corresponding data signal values corresponding to the one or more clock edge transitions; and
a disaggregator connected and configured to separate the multi-bit clock phase data codewords received in the one or more frames and to decode each multi-bit clock phase data codeword into an output stream comprising a reconstructed data signal and reconstructed bit clock signal that is generated from the count of one or more clock edge transitions within the defined recording interval and the timing location information for the one or more clock edge transitions within the defined recording interval.
